# EUROPEAN PATENT APPLICATION

(11) **EP 2 442 094 A1**
(43) Date of publication of application: **18.04.2012**
(21) Application number: 10785899.5
(22) Date of filing: 27.05.2010
(51) Int. Cl.: G01N 21/64

(54) **FLUORESCENCE DETECTION DEVICE AND FLUORESCENCE DETECTION METHOD**

(30) Priority: 12.06.2009 JP 2009140766
(71) Applicant: Mitsui Engineering & Shipbuilding Co., Ltd., Chuo-ku Tokyo 104-8439 (JP)
(72) Inventor: DOI, Kyoji, Tamano-shi Okayama 706-8651 (JP); HAYASHI, Hironori, Tamano-shi Okayama 706-8651 (JP); HOSHIJIMA, Kazuteru, Tamano-shi Okayama 706-8651 (JP); ASANO, Yumi, Tamano-shi Okayama 706-8651 (JP)
(74) Representative: Hards, Andrew
(86) International application number: PCT/JP2010/003563
(87) International publication number: WO 2010/143367

(57) **Abstract**

A fluorescence emitted by a measurement object at a measurement point is measured. When the fluorescence is measured, a measurement obj ect is irradiated with laser light whose intensity is time-modulated by using a modulation signal at a predetermined frequency. Then, the fluorescence emitted by the measurement object is formed to a flux of the fluorescence having uniform distribution of light intensity, and a plurality of partial fluorescent signals are generated by receiving a plurality of divided portions of the flux of the fluorescence. At least some of the partial fluorescent signals are added altogether to generate a single fluorescent signal. Finally, a fluorescence relaxation time of the fluorescence emitted by the measurement object is calculated from the generated fluorescent signal by using the modulation signal. When fluorescence intensity of the fluorescence calculated from the fluorescent signal exceeds a predetermined threshold, the partial fluorescent signals to be added are limited in number. Thereby, an output power of the light-receiving unit can not be prevented from saturation.

## Description

### TECHNICAL FIELD

The present invention relates to a fluorescence detection device and a fluorescence detection method for processing fluorescent signal which is obtained by receiving fluorescence emitted from a measurement object irradiated with laser light.

### BACKGROUND ART

A flow cytometer for use in medical and biological fields is a device that receives fluorescence emitted by a measurement object irradiated with laser light and identifies and analyzes the kind of the measurement object.
More specifically, in the flow cytometer, a suspension liquid containing a measurement object such as a biological material (e.g., cells, DNA, RNA, enzymes, or proteins) labeled with a fluorescent reagent is allowed to flow through a tube together with a sheath liquid flowing under pressure at a speed of about 10 m/sec or less to form a laminar sheath flow. The flow cytometer receives fluorescence emitted by a fluorochrome attached to the measurement object by irradiating the measurement object in the laminar sheath flow with laser light and identifies the measurement object by using the fluorescence as a label.

The flow cytometer can measure, for example, the relative amounts of DNA, RNA, enzymes, proteins, etc. contained in a cell and can quickly analyze their functions. Especially, in a medical field, an elaborate research of an interaction between proteins is made by using FRET (Fluorescence Resonance Energy Transfer) efficiently. FRET is a phenomenon in which an energy of a first molecule is transferred into an energy of a second molecule by exciting the second molecule with the energy of the first molecule, which is irradiated with laser light and excited.

A detection method and a detection device are disclosed in Patent Document 1 described below, which is capable of measuring FRET efficiency quantitatively while eliminating the indefinite element in fluorescence detection information.
In the detection method and the detection device, a measurement sample is irradiated with laser light whose intensity is time-modulated at a predetermined frequency, then fluorescence emitted by the measurement sample is received by a plurality of detection sensors. Finally, detection value including information of fluorescence intensity and fluorescence phase is acquired.

### PRIOR ART DOCUMENT

### Patent Document

Patent Document 1: Japanese Patent Application Laid-Open No. 2007-240424

### DISCLOSURE OF THE INVENTION

### PROBLEMS TO BE SOLVED BY THE INVENTION

However, in the detection method and the detection device disclosed in the Patent Document 1, there are some cases that an output power of a light-receiving element receiving the fluorescence is saturated because fluorescence intensity of the fluorescence emitted by the measurement sample has too wide dynamic range. Accordingly, phase information of the fluorescence cannot be obtained.
When a photo multiplier tube (PMT) is employed for the light-receiving element, an output of the light-receiving element can be prevented from the saturation by a gain adjustment with a control of an acceleration voltage applied to the PMT, generally. But, the gain adjustment affects a electron transit time in the PMT, because the gain is adjusted with a control of an acceleration voltage which accelerates an electron in the PMT. Accordingly, phase information of the fluorescence cannot be obtained correctly. To obtain the phase information correctly, a calibration table must be prepared, which may be troublesome.
The problem of saturation of an output of the light-receiving element is not limited to the fluorescence detection using FRET.

Further, saturation of an output power of the light-receiving element can be prevented by mechanically adjusting light intensity with a neutral density filter based on calculated fluorescence intensity, the neutral density filter provided before the light-receiving surface of the element, such as a PMT and an avalanche photodiode. However, the method is difficult to adjust light intensity in a short time such as 10 milliseconds, when the measurement sample passes by at a measurement point where the sample is irradiated with laser light.

In order to solve the above problem, it is an object of the present invention to provide a fluorescence detection device and a fluorescence detection method for processing fluorescent signal which is obtained by receiving fluorescence emitted by a measurement obj ect at a measurement point irradiated with laser light, the method and the device being capable of preventing an output power of a light-receiving unit from being saturated in a different way from the conventional way.

### MEANS FOR SOLVING THE PROBLEMS

The above object is accomplished by a following fluorescence detection device which processes fluorescent signal obtained by receiving fluorescence which is emitted by a measurement obj ect at a measurement point, the measurement obj ect irradiated with laser light.
The device includes:
(A) a laser light source unit operable to output laser light for irradiation of a measurement obj ect;
(B) a light-receiving unit operable to output a fluorescent signal of fluorescence emitted by the measurement object which is irradiated with the laser light;
(C) a light source control unit operable to generate a modulation signal at a predetermined frequency to time-modulate intensity of the laser light outputted from the laser light source unit; and
(D) a processing unit operable to calculate, by using the modulation signal, a fluorescence relaxation time of the fluorescence emitted by the measurement object from the fluorescent signal outputted from the light-receiving unit when the measurement object is irradiated with the time-modulated laser light.
(E) The light-receiving unit includes a lens for collecting the fluorescence which is arranged between the measurement point of the measurement obj ect and a light-receiving surface for the fluorescence, a means for forming the fluorescence passing through the lens to a light flux whose distribution of light intensity is uniform, and light-receiving elements which receive, on a plurality of segments thereof separately, a plurality of divided portions of the flux of the fluorescence formed by the means, respectively.

The light-receiving unit preferably includes a signal addition device operable to add partial fluorescent signals each other, the partial fluorescent signals obtained by receiving the flux on the plurality of the segments of the light-receiving elements respectively.
More preferably, the light-receiving unit includes switching circuits operable to operate on or off supplies of the partial fluorescent signals to the signal addition device for respective segments.
Still more preferably, the processing unit is operable to calculate the fluorescence relaxation time, and further operable to limit, in number, the partial fluorescent signals to be supplied to the signal addition device by the switching circuits when fluorescence intensity calculated from the fluorescent signal exceeds a predetermined threshold.
Then, the light-receiving unit preferably includes gain adjusters adjusting gains of the partial fluorescent signals for the respective segments before some of the partial fluorescent signals are supplied to the switching circuits so that gains of the adjusted partial fluorescent signals may be identical with each other.

The light-receiving unit may preferably include a diffuser panel between the lens and the light-receiving surface to cause the lens to focus the fluorescence on the diffuser panel.
Alternatively, the light-receiving unit may include an tube-shaped optical wave guide between the lens and the light-receiving surface. The optical wave guide is arranged in parallel with an axis of the lens to cause the optical wave guide to reflect the fluorescence incident thereto on a surface of a wall thereof.
More alternatively, the light-receiving unit may have the lens arranged to form the collected fluorescence to a flux of light substantially collimated light and having uniform distribution of light intensity.

The above object is accomplished by a following fluorescence detection method for processing fluorescent signal obtained by receiving fluorescence which is emitted by a measurement object at a measurement point, the measurement object irradiated with laser light. The method includes the steps of:
(F) irradiating a measurement object with laser light whose intensity is time-modulated by using a modulation signal at a predetermined frequency;
(G) forming fluorescence emitted by the measurement object irradiated with the laser light to a flux of the fluorescence having uniform distribution of light intensity, and generating a plurality of partial fluorescent signals by receiving a plurality of divided portions of the flux of the fluorescence, respectively;
(H) adding at least some of the partial fluorescent signals altogether to generate a single fluorescent signal;
(I) calculating a fluorescence relaxation time of the fluorescence emitted by the measurement obj ect from the generated fluorescent signal by using the modulation signal.

Preferably, the method further includes a step of limiting, in number, the partial fluorescent signals to be added when fluorescence intensity of the fluorescence emitted from the measurement object is calculated from the fluorescent signal and the calculated fluorescence intensity exceeds a predetermined threshold.

### EFFECTS OF THE INVENTION

In the above described fluorescence detection device and method, the fluorescence passing through the lens is formed to a flux of the fluorescence having uniform distribution of light intensity and a plurality of divided portions of the flux are received on the plurality of receiving segments separately. That is to say, in the above described fluorescence detection device and method, the fluorescence having uniform distribution of light intensity is divided to the portions and the portions are received on the receiving surfaces respectively. Therefore, output powers from the light-receiving elements in the light-receiving unit can be prevented from saturation.
Further, when the switching circuits are employed, and at first all of the switching circuits are operated on, and then the fluorescence intensity calculated in the device exceeds a predetermined threshold, some of the switching circuits can be operated off. Therefore, signal level in the processing unit can be regulated without any restraint by using the switching circuits. As a result, dynamic range of the fluorescence intensity which can be processed and outputted in the processing unit is extended wider than before and the fluorescence relaxation time can be calculated in a wide dynamic range of the fluorescence intensity.

### BRIEF DESCRIPTION OF THE DRAWINGS

FIG 1 is a schematic diagram illustrating the structure of a flow cytometer which uses one embodiment of a fluorescence detection device of the present invention.
FIG 2 is a schematic diagram illustrating the structure of one example of a laser light source unit in the flow cytometer illustrated in FIG 1.
FIG 3 is a schematic diagram illustrating the structure of one example of a light-receiving unit in the flow cytometer illustrated in FIG 1.
FIG 4 is a schematic diagram illustrating the structure of one example of a control/processing unit in the flow cytometer illustrated in FIG 1.
FIG 5 is a schematic diagram illustrating the structure of one example of an analyzing device in the flow cytometer illustrated in FIG 1.
FIG 6 is a schematic diagram illustrating the structure of another example of a light-receiving unit different from the light-receiving unit illustrated in FIG3.
FIG 7 is a schematic diagram illustrating the structure of still another example of a light-receiving unit different from the light-receiving unit illustrated in FIG3.

### DESCRIPTION OF EMBODIMENTS

Hereinbelow, a fluorescence detection device and a fluorescence detection method according to the present invention will be described in detail based on the embodiments illustrated in the figures.

### <Embodiment>

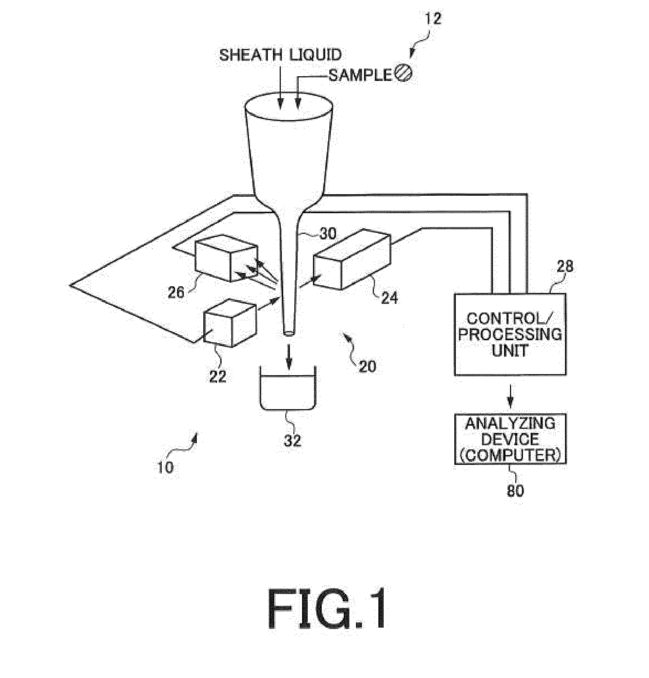

FIG 1 is a schematic diagram illustrating the structure of one example of a flow cytometer 10 that uses a fluorescence detecting device. The flow cytometer 10 includes a signal processing unit 20 and an analyzing device (computer) 80. The signal processing device 20 detects and processes fluorescent signal of fluorescence emitted by a fluorochrome introduced into a sample 12 , such as a fluorescently-stained protein which is labeled by the fluorechrome as a measurement object. The sample 12 is irradiated with laser light when the sample 12 passes by at a measurement point for fluorescence detection. The analyzing device 80 calculates a fluorescence relaxation time of the measurement object in the sample 12 from processed results obtained by the signal processing device 20 and analyzes the measurement obj ect.

The signal processing device 20 includes a laser light source unit 22, light-receiving units 24 and 26, a control/processing unit 28, and a tube 30.
The control/processing unit 28 includes a controller which modulates the intensity of laser light emitted from the laser light source unit 22 at a predetermined frequency, and a signal processing unit which processes fluorescent signal from the sample 12. The tube 30 allows a sheath liquid forming a high speed flow to flow therethrough together with the samples 12 to form a laminar sheath flow.
A collection vessel 32 is provided at the outlet of the tube 30. The flow cytometer 10 may include a cell sorter to quickly separate a sample 12 and other samples and to collect them into different collection vessels after irradiating the sample 12 with laser light and identify the sample 12 as a specific sample in a short time.

The laser light source unit 22 emits laser light having a predetermined wavelength. The laser light source unit 22 has a lens system so that the laser light is focused on a predetermined position in the tube 30. The sample 12 is measured at a position (measurement point) on which the laser light is focused.

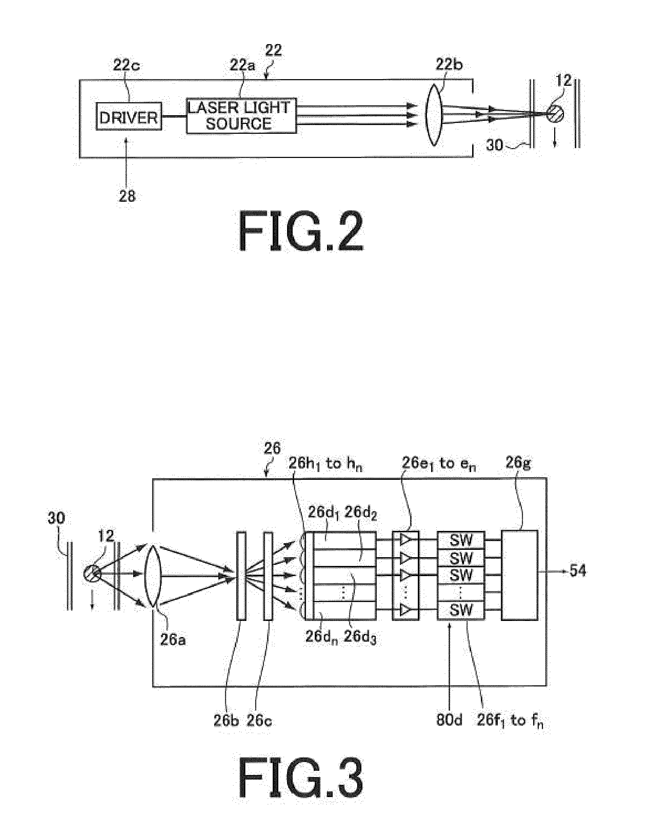

FIG 2 is a schematic diagram illustrating one example of the structure of the laser light source unit 22.
The laser light source unit 22 includes a laser light source 22a, a lens 22b, and a laser driver 22c.
The laser light source 22a emits laser light which has a predetermined wavelength within a visible light band of 350 nm to 800 nm. The intensity of the laser light emitted from the laser light source 22a is modulated. The laser light source 22a emits, for example, red CW (continuous-wave) laser light of constant intensity while modulating the intensity of the CW laser light at a predetermined frequency. The laser light source 22a can emit, for example, green CW laser light of constant intensity while modulating the intensity of the CW laser light at a predetermined frequency. The laser light source 22a can emit, for example, blue CW laser light of constant intensity while modulating the intensity of the CW laser light at a predetermined frequency.
The lens 22b focuses the laser light on the measurement point in the tube 30. The sample 12 is irradiated with the laser light as a beam spot having about several tens micrometers in diameter. The laser driver 22c generates a signal for driving the laser light source 22a by using a signal sent from the control/processing unit 28.

As the laser light source 22a, a semiconductor laser is used, for examle. The laser light has an output power of, for example, about 5 to 100 mW. On the other hand, the frequency (modulation frequency) at which the intensity of the laser light is modulated has a periodical cycle time slightly longer than the fluorescence relaxation time of the sample 12, and is, for example, 10 to 200 MHz.

The laser light source 22a oscillates the laser light at a predetermined wavelength band so as to emit fluorescence within a specific wavelength band from the fluorochrome excited by the laser light. The fluorochrome excited by the laser light is attached to a sample 12 to be measured. When the sample 12 passes by at the measurement point in the tube 30 as a measurement object, the sample 12 irradiated with the laser light emits fluorescence of a specific wavelength at the measurement point.

The light-receiving unit 24 is arranged so as to be opposed to the laser light source unit 22 with the tube 30 being provided therebetween. When the sample 12 passes by at the measurement point, the laser light is forward-scattered by the sample 12. The light-receiving unit 24 includes a photoelectric converter which outputs detection signal indicating the passage of the sample 12 at the measurement point by using the forward-scattered light. The signal output from the light-receiving unit 24 is sent to the control/processing unit 28, and is used in the control/processing unit 28 as a trigger signal to announce the timing of passage of the sample 12 at the measurement point in the tube 30.

The light-receiving unit 26 is arranged on a intersection line defined between a plane passing on the measurement point and perpendicular to a direction in which the laser light emitted from the laser light source unit 22 travels and a plane passing on the measurement point and perpendicular to a direction in which the sample 12 moves in the tube 30. The light-receiving unit 26 is equipped with a photo multiplier tube that receives the fluorescence emitted by the sample 12 at the measurement point.

FIG3 is a schematic diagram illustrating the structure of one example of a light-receiving unit 26. The light-receiving unit 26 illustrated in FIG3 includes a lens 26a, a diffuser panel 26b, a band-pass filter 26c, PMTs (photo multiplier tubes) 26d₁ to 26dₙ (n is an integer equal to or more than 1), gain adjusters 26e₁ to 26eₙ (n is an integer equal to or more than 1), switching circuits 26f₁ to 26fₙ (n is an integer equal to or more than 1), a signal addition circuit (power combiner) 26g, and an array of lens 26h₁ to 26hₙ (n is an integer equal to or more than 1).

The lens 26a collects the fluorescence emitted by the sample 12.
The diffuser panel 26b is a plate member which diffuses the fluorescence focused on the surface thereof by the lens 26a. The diffuser panel 26b employs a transparent sheet whose surface is formed with asperity for causing scattered reflection of incident light to the sheet or a transparent sheet containing fine particles dispersed therein for causing scattered reflection of incident light in the sheet. The fluorescence incident to the diffuser panel 26b is made diffusion light having a uniform distribution of light intensity to output from the diffuser panel 26b.

The band-pass filter 26c is a filter bank which is provided before the light-receiving surfaces of the PMTs 26d₁ to 26dₙ and transmits fluorescence within a wavelength band. The wavelength band is predetermined corresponding to the wavelength band of the fluorescence.
The array of lens 26h₁ to 26hₙ collect a flux of the fluorescence transmitting the band-pass filter 26c for higher efficiently light-receiving. The flux includes even a portion thereof which might be incident to the voids of the light-receiving surfaces or partitions of the light-receiving surfaces of the PMTs 26d₁ to 26dₙ if the array of lens 26h₁ to 26hₙ is not provided, for higher efficiently light-receiving. If the fluorescence is incident to the partitions of the PMTs 26d₁ to 26dₙ, the incidence of the fluorescence may cause electrons to transit in the partitions and undesired fluorescent signal due to the electrons having long transit time may be generated. Accordingly, the interval and size of the lens 26h₁ to 26hₙ in the array are modified according to the light-receiving surfaces of the PMTs 26d₁ to 26dₙ, not to allow the fluorescence incident to the partitions.

The PMTs 26d₁ to 26dₙ receive, separately on a plurality of the receiving segments thereof, respective portions of the flux of the fluorescence which are obtained by dividing the flux of the fluorescence into a plurality of the portions, and then output fluorescence signals of the fluorescence. The PMTs 26d₁ to 26dₙ are configured to be integrated into a single device. Multi channel PMT may be employed for the PMTs 26d₁ to 26dₙ. Avalanche photodiodes may be employed in stead of the PMTs in the light-receiving unit 26.
Each of the gain adjusters 26e₁ to 26eₙ includes a current-voltage converter and a voltage adjuster. The current-voltage converter converts current to voltage so that an adding process of the signals can be operated, since an output from each of the PMTs 26d₁ to 26dₙ is current. The voltage adjuster adjusts voltage by adjusting a gain of a voltage gain amp therein or adjusting a resistance of a variable resistor. With the gain adjusters 26e₁ to 26eₙ, the gain adjustment is performed to output fluorescent signals at the same voltage level with each other even when fluorescence having a uniform light intensity distribution is incident. Specifically, the fluorescent signal from each of the segments of the PMTs 26d₁ to 26dₙ is gain-adjusted for an output at the same level before the fluorescent signal is supplied to the switching circuits 26f₁ to 26fₙ. Why the gain adjustment of the fluorescent signal from each segmentt of the PMTs 26d₁ to 26dₙ (the fluorescent signal will be referred to as a partial fluorescent signal) is performed for an output at the same level is that the number of partial fluorescent signals to be added altogether is limited by the switching circuits 26f₁ to 26fₙ as described later.

The switching circuits 26f₁ to 26fₙ switch on and off the supply of the partial fluorescent signal from each segment, to control the partial fluorescent signal, which is now voltage signal, to be supplied to the signal addition circuit 26g or not, which will be described later. The on and off operation is controlled by a control signal sent from a signal control unit 80d in the analyzing device 80 which will be described. Thereby, the number of partial fluorescent signals to be supplied to the signal addition circuit 26g can be limited.
The signal addition circuit 26g adds the partial fluorescent signals supplied through the switching circuits 26f₁ to 26fₙ to output a single fluorescent signal. Specifically the partial fluorescent signals supplied through the switching circuits 26f₁ to 26fₙ among all of the partial fluorescent signals are added altogether for the single fluorescent signal.

The control signal of the on and off operation for the switching circuits 26f₁ to 26fₙ is generated in the analyzing device 80. Specifically, when fluorescence intensity which was calculated in the analyzing device 80 exceeds a predetermined threshold, the control signal is generated to control the switching circuits 26f₁ to 26fₙ to limit the number of the partial fluorescent signals to be supplied to the signal addition circuit 26g. Which switching circuit among the switching circuits 26f₁ to 26fₙ is operated on is not requested in particular. It is because the fluorescent signal is obtained by receiving diffusion light having a uniform distribution of light intensity due to the diffuser panel 26b by the PMTs 26d₁ to 26dₙ and each partial fluorescent signal from receiving segments is adjusted to have the same gain.
The single fluorescent signal generated in the signal addition circuit 26g is supplied to a amplifier 54 in the signal processing unit 42 of the control/processing unit 28.
In the embodiment, the gain adjusters 26e₁ to 26eₙ and the switching circuits 26f₁ to 26fₙ are provided. The gain adjusters 26e₁ to 26eₙ may not be provided if the PMTs 26d₁ to 26dₙ which receives light having a uniform distribution of light intensity output currents at the same level. In the case, the embodiment may be configured to add the output currents selectively through the switching circuits 26f₁ to 26fₙ and then to convert the added current to voltage, which will make up a simple configuration because the switching circuits 26f₁ to 26fₙ are used for the current addition.
In the embodiment, the on and off operation of the switching circuits 26f₁ to 26fₙ is controlled by the control signal sent from the signal control unit 80d in the analyzing device 80. However, an operator of the flow cytometer 10 may set the switching circuits which will be operated on or off among the switching circuits 26f₁ to 26fₙ through the manual operation of the operator with reference to an output of a calculation result of the fluorescence intensity.

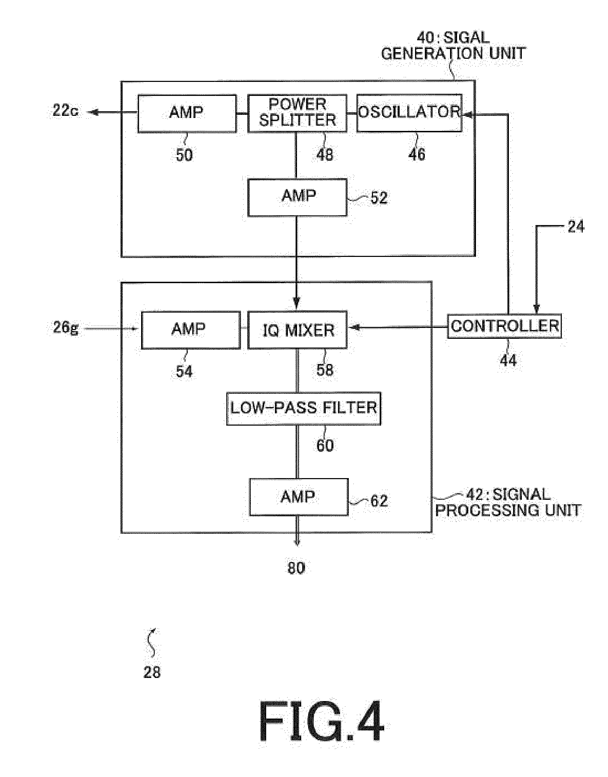

As illustrated in Fig. 4, the control/processing unit 28 includes a signal generation unit 40, a signal processing unit 42, and a controller 44. The signal generation unit 40 and the controller 44 constitute a light source control unit for generating a modulation signal at a predetermined frequency.
The signal generation unit 40 generates a modulation signal for modulating the intensity (modulating the amplitude) of the laser light at a predetermined frequency. More specifically, the signal generation unit 40 includes an oscillator 46, a power splitter 48, and amplifiers 50, 52. The signal generation unit 40 supplies the modulation signal generated by the oscillator 46 to the laser drivers 22c of the laser light source unit 22 through the amplifier 50 and supplies the modulation signal also to the signal processing unit 42 through the amplifier 52. As will be described later, the modulation signal supplied to the signal processing unit 42 are used as a reference signal for detecting the fluorescent signal outputted from the signal addition circuit 26g. It is to be noted that the modulation signal is a sinusoidal signal having a predetermined frequency and the frequency is set to a value in the range of 10 to 50 MHz.

The signal processing unit 42 extracts, by using the fluorescent signal outputted from the signal addition circuit 26g, information about phase delay of fluorescence emitted by the sample 12 by irradiation with laser light. The signal processing unit 42 includes an amplifier 54, a IQ mixers 58, a low-pass filter 60, and an amplifier 62. The amplifier 54 amplifies the fluorescence signal outputted from the signal addition circuit 26g. The IQ mixer 58 receives the amplified fluorescent signal and the modulation signal which is a sinusoidal signal supplied from the signal generation unit 40, and mixes the amplified fluorescent signal with the modulation signal as a reference signal. The low-pass filter 60 filters processing results by the IQ mixer 58 to extract low-frequency component including a DC component. The amplifier 62 amplifies the low-frequency component.

The IQ mixer 58 is a device that mixes the fluorescent signal supplied from the signal addition circuit 26g with the modulation signal supplied from the signal generation unit 40 as a reference signal. More specifically, the IQ mixers 58 multiplies the reference signal by the fluorescent signal (RF signal) to generate a processed signal including a cosine component of the fluorescent signal and high-frequency signal component. The IQ mixer 58 multiplies a signal which is obtained by 90 degrees phase-shift of the reference signal, by the fluorescent signal to generate another processed signal including a sine component of the fluorescent signal and high-frequency signal component. The both of the processed signal including the cosine component and the processed signal including the sine component are supplied to the low-pass filter 50. The low-pass filter 50 extracts the cosine component and the sine component of the fluorescent signal from the processed signals. The cosine component which will be referred to as Re component data, and the sine component which will be referred to as Im component data are amplified at the amplifier 62 and are supplied to the analyzing device 80.

The controller 44 controls the signal generation unit 40 to generate a sinusoidal signal at a predetermined frequency. The controller 44 generates a trigger signal for starting process of the sample12 and sends the trigger signal to the IQ mixer 58. Thereby, the IQ mixer 58 is informed of the timing of the passage of the sample 12 at the measurement point and starts to process the fluorescent signal.

The analyzing device 80 calculates phase delay θ and a value of fluorescence intensity of the fluorescence by using the supplied Re component data (cosine component of the fluorescent signal) and the supplied Im component data (sine component of the fluorescent signal). Further, when the value of the fluorescence intensity falls outside a predetermined range, the analyzing device 80 generates a control signal which limits the numbers of the partial fluorescent signals which are to be supplied to the signal addition circuit 26g from some of the switching circuits 26f₁ to 26fₙ. The analyzing device 80 sends the signal to the switching circuits 26f₁ to 26fₙ.

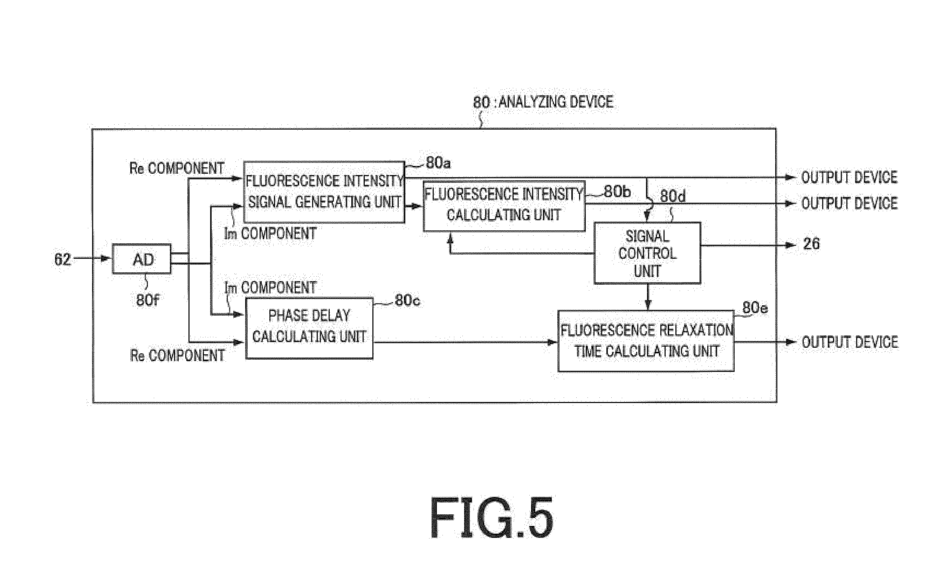

FIG 5 is a diagram illustrating the outline of the structure of the analyzing device 80. The analyzing device 80 includes a fluorescence intensity signal generating unit 80a, a fluorescence intensity calculating unit 80b, a phase delay calculating unit 80c, a signal control unit 80d, and a fluorescence relaxation time calculating unit 80e. These units are modules which are formed when the computer executes an executable program. The analyzing device 80 has the functions thereof performed on the computer when the software is executed. The analyzing device 80 further includes an AD converter 80f

The fluorescence intensity signal generating unit 80a calculates fluorescence intensity signal by determining the square root of the sum of the square of the Re component data and the square of the Im component data, both of which are supplied from the amplifier 62 and converted into digital signals by the AD converter 80f. The calculated fluorescence intensity signal is supplied to the fluorescence intensity calculating unit 80b. It is to be noted that the fluorescence intensity signal is time series data which is obtained by using the Re component data and the Im component data which are successively supplied during the passage of the sample 12 at the measurement point of the laser light.

The fluorescence intensity calculating unit 80b calculates a value of the fluorescence intensity during the passage of the sample 12 at the measurement point, from the fluorescence intensity signal which is time series data outputted from the fluorescence intensity signal generating unit 80a. The fluorescence intensity calculating unit 80b calculates a value of the fluorescence intensity based on the number of the on state of the switching circuits among the switching circuits 26f₁ to 26fₙ when the number of the on state is limited. When the number of the on state is limited, the larger value of the correction coefficient for obtaining the value of the fluorescence intensity is used than a value of the correction coefficient which is used when all of the switching circuits 26f₁ to 26fₙ are on. The value of the fluorescence intensity may be each value of the fluorescence intensity for each time or a single vale integrated all over the time during the passage of the sample 12 at the measurement point. The fluorescence intensity calculating unit 80b can be informed of the passage of the sample 12 at the measurement point by the detection signal sent from the light-receiving unit 24. Thus calculated value of the fluorescence intensity is supplied to the signal control unit 80d.
The phase delay calculating unit 80c determines tan⁻¹(Im/Re) (Im is a value of the Im component data and Re is a value of the Re component data) by using the Re component data and the Im component data which are supplied from the amplifier 62 and converted into digital signals by the AD converter 80f, to calculates phase delay θ. The calculated phase delay θ is supplied to the signal control unit 80d and also the fluorescence relaxation time calculating unit 80e.

The fluorescence relaxation time calculating unit 80e calculates the fluorescence relaxation time τ by the following formula using the phase delay angle θ which is supplied from the phase delay calculating unit 80c: τ = 1/(2πf) tanθ. The reason why the fluorescence relaxation time τ can be obtained by the above formula is that the fluorescence responds while it almost follows the first-order relaxation process. The frequency f is a frequency of the modulation signal and fixed in advance.

The signal control 80d determines whether the value of the fluorescence intensity supplied from the fluorescence intensity calculating unit 80b falls in within a predetermined range or not, and generates a control signal for the switching circuits 26f₁ to 26fₙ. When the value falls in within the predetermined range, the signal control unit 80d instructs the fluorescence intensity calculating unit 80b and the fluorescence relaxation time calculating unit 80e to output the calculation result of the fluorescence intensity and the fluorescence relaxation result.
Specifically, when the value of the fluorescence intensity supplied from the fluorescence intensity calculating unit 80b does not fall in within the predetermined range, the signal control 80d obtains the number of the switching circuits which is to be operated off among the switching circuits 26f₁ to 26fₙ and generates the control signal according to the obtained number. More specifically, when the value of the fluorescence intensity exceeds the predetermined threshold, the number of the partial fluorescent signals to be supplied to the signal addition device 26g by the switching circuits 26f₁ to 26fₙ is limited.

The signal control 80d controls the on or off operation of the switching circuits 26f₁ to 26fₙ according to the determination result of the fluorescence intensity. The calculated fluorescence intensity, the fluorescence relaxation time τ, and the fluorescent signal and the phase delay θ which are time series data, are outputted to the output device which is not illustrated in FIG 5.

The flow cytometer 10, first of all, time-modulates the intensity of laser light with which a sample 12 is irradiated, using modulation signal at a predetermined frequency and the sample 12 is irradiated with the laser light at a measurement point. Next, the light-receiving unit 26 allows the diffuser panel 26b to form the fluorescence emitted by the sample 12 which is irradiated with the laser light into a flux of the fluorescence whose intensity distribution is uniform before separately receiving the flux of the fluorescence on a plurality of segments of the PMTs 126d₁ to 126dₙ. Thereby, partial fluorescent signals are generated for each of the plurality of the segments. The signal addition circuit 26g generates a single fluorescent signal by addition of at least some of the partial fluorescent signals which are generated for the plurality of the segments respectively. The control/processing unit 28 and the analyzing device 80 find the Re component data and the Im component data of the fluorescence emitted by the sample 12 from the generated single fluorescent signal by using the modulation signal, and calculates the fluorescence relaxation time by using the found Re component data and the found Im component data. At that time, when the fluorescence intensity of the fluorescence emitted by the sample 12 which is calculated from the fluorescent signal exceeds a predetermined threshold, the partial fluorescent signals for respective segments which are generated by the PMTs 26d₁ to 26dₙ and which are to be added altogether are limited in number.

As described above, the light-receiving unit 26 of the flow cytometer 10 includes the lens 26a and the diffuser panel 26b. The light-receiving unit 26 allows the diffuser panel 26b to form the fluorescence passing through the lens 26a into flux whose intensity distribution is uniform and allows the PMTs 26d₁ to 26dₙ to receive a plurality of divided portions of the flux of the fluorescence on a plurality of segments thereof separately. Since the divided portions of the fluorescence are received on a plurality of the segments separately as light having uniform distribution of light intensity, output powers from the PMTs 26d₁ to 26dₙ can be prevented from being saturated.
Further, when the light-receiving unit 26 operates all of the switching circuits 26f₁ to 26fₙ to be on at first and the fluorescence intensity calculated in the analyzing device 80 exceeds a threshold, some of the switching circuits 26f₁ to 26fₙ can be turned off. Accordingly, the signal level in the signal processing unit 42 and the analyzing device 80 can be regulated without any restraint, and dynamic range of the fluorescence intensity which can be processed and outputted in the signal processing unit 42 and analyzing device 80 is extended wider than before. Therefore, the fluorescence relaxation time can be calculated in a wide dynamic range of the fluorescence intensity. The intensity distribution of the received fluorescence is so uniform in the flux that only information of the number of the partial fluorescent signals which are not to be supplied by the switching circuits 26f₁ to 26fₙ is required. Which switching circuit among switching circuits 26f₁ to 26fₙ is turned off is not required.

### <Modification 1 of the embodiment>

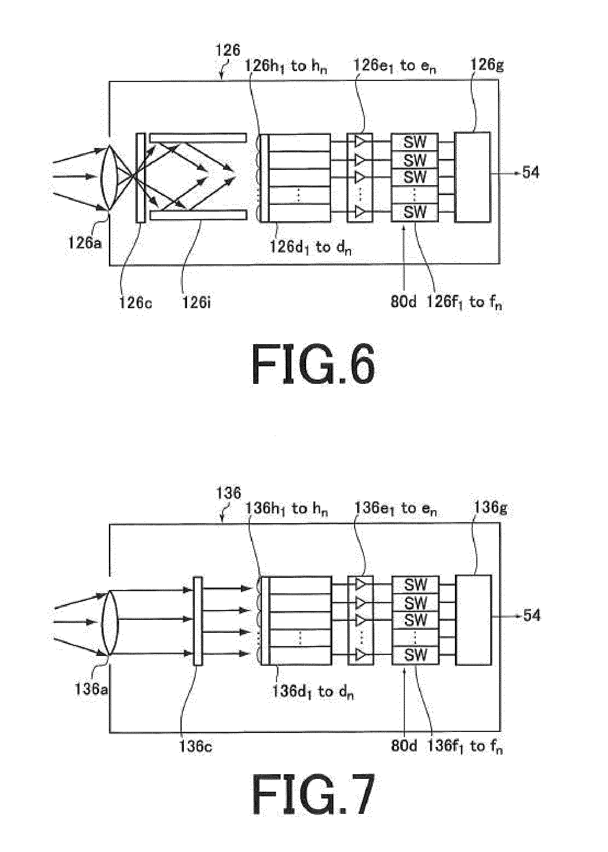

FIG 6 is a schematic diagram illustrating the structure of the light-receiving unit 126 which is modified from the light-receiving unit 26 illustrated in FIG3. The light-receiving unit 126 is, similar to the light-receiving unit 26, arranged on a intersection line defined between a plane passing on the measurement point and perpendicular to a direction in which laser light emitted from the laser light source unit 22 travels and a plane passing on the measurement point and perpendicular to a direction in which the sample 12 moves in the tube 30. The light-receiving unit 126 is equipped with a photo multiplier tube that receives fluorescence emitted by the sample 12 at the measurement point.

The light-receiving unit 126 includes a lens 126a which collects fluorescence emitted by the sample 12, a band-pass filter 126c, an optical wave guide 126i, PMTs (photo multiplier tubes) 126d₁ to 126dₙ (n is an integer equal to or more than 1), gain adjusters 126e₁ to 126eₙ (n is an integer equal to or more than 1), switching circuits 126f₁ to 126fₙ (n is an integer equal to or more than 1), a signal addition circuit 126g, and an array of lens 126h₁ to 126hₙ (n is an integer equal to or more than 1).
The lens 126a, the band-pass filter 126c, the PMTs (photo multiplier tubes) 126d₁ to 126dₙ (n is an integer equal to or more than 1), the gain adjusters 126e₁ to 126eₙ, the switching circuits 126f₁ to 126fₙ, the signal addition circuit 126g, and the array of lens 126h₁ to 126hₙ, have the same constructions and functions as the lens 26a, the band-pass filter 26c, the PMTs (photo multiplier tubes) 26d₁ to 26dₙ (n is an integer equal to or more than 1), the gain adjusters 26e₁ to 26eₙ, the switching circuits 26f₁ to 26fₙ, the signal addition circuit 26g, and the array of lens 26h₁ to 26hₙ. Therefore, description of them will be omitted.

The optical wave guide 126i is arranged on a side of the light-receiving surfaces with reference to the focusing point of lens 126a. The fluorescence is incident on the optical wave guide 126i after the fluorescence passes throughout the band-pass filter 126c while the flux of the fluorescence is expanding. The optical wave guide 126i is in tube shape having a polygonal column body such as hexagonal column body.
The fluorescence which passed throughout the lens 126a and passed by at the focusing point is reflected on the inside wall surfaces of the optical wave guide 126i and reaches the array of lens 26h₁ to 26hₙ while expanding the flux thereof. The fluorescence which reaches the array of lens 26h₁ to 26hₙ is formed to diffusing light which spreads in many directions and has uniform distribution of light intensity. The array of lens 126h₁ to 126hₙ collects fluorescence having uniform distribution of light intensity and the PMTs (photo multiplier tubes) 126d₁ to 126dₙ receive the collected fluorescence. The optical wave guide 126i is exemplified by TECSPEC (registered trademark) Light Pipe produced by Edmund Optics.

As described above, the light-receiving unit 126 includes the lens 126a and the optical wave guide 126i. The light-receiving unit 126 allows the optical wave guide 126i to form the fluorescence passing throughout the lens 126a to the flux whose distribution of light intensity is uniform and allows the PMTs 126d₁ to 126dₙ to receive a plurality of divided portions of the flux of the fluorescence on a plurality of segments thereof separately, in the same manner as the light-receiving unit 26 illustrate in FIG 3. Since the divided portions of fluorescence are received on a plurality of the segments separately as light having uniform distribution of light intensity, output powers from the PMTs 126d₁ to 126dₙ can be prevented from being saturated.
Further, when the light-receiving unit 126 operates all of the switching circuits 126f₁ to 126fₙ to be on at first and the fluorescence intensity calculated in the analyzing device 80 exceeds a threshold, some of the switching circuits 126f₁ to 126fₙ can be turned off. Accordingly, the signal level in the signal processing unit 42 and the analyzing device 80 can be regulated without any restraint, and dynamic range of the fluorescence intensity which can be processed and outputted in the signal processing unit 42 and analyzing device 80 is extended wider than before. Therefore, the fluorescence relaxation time can be calculated in a wide dynamic range of the fluorescence intensity. When the analyzing device 80 calculates the fluorescence intensity, the fluorescence intensity is calculated based on information of the number of the on operation of the switching circuits among the switching circuits 126f₁ to 126fₙ.

### <Modification 2 of the embodiment>

FIG 7 is a schematic diagram illustrating the structure of the light-receiving unit 136 which is modified from the light-receiving unit 26 illustrated in FIG3. The light-receiving unit 136 is, similar to the light-receiving unit 26, arranged on a intersection line defined between a plane passing on the measurement point and perpendicular to a direction in which laser light emitted from the laser light source unit 22 travels and a plane passing on the measurement point and perpendicular to a direction in which the sample 12 moves in the tube 30. The light-receiving unit 136 is equipped with a photo multiplier tube that receives fluorescence emitted by the sample 12 at the measurement point.

The light-receiving unit 136 includes a lens 136a which collects fluorescence emitted by the sample 12, a band-pass filter 136c, PMTs (photo multiplier tubes) 136d₁ to 136dₙ (n is an integer equal to or more than 1), gain adjusters 136e₁ to 136eₙ (n is an integer equal to or more than 1), switching circuits 136f₁ to 136fₙ (n is an integer equal to or more than 1), a signal addition circuit 136g, and an array of lens 136h₁ to 136hₙ (n is an integer equal to or more than 1).
The lens 136a, the band-pass filter 136c, the PMTs (photo multiplier tubes) 136d₁ to 136dₙ (n is an integer equal to or more than 1), the gain adjusters 136e₁ to 136eₙ, the switching circuits 136f₁ to 136fₙ, the signal addition circuit 136g, and the array of lens 136h₁ to 136hₙ, have the same constructions and functions as the lens 26a, the band-pass filter 26c, the PMTs (photo multiplier tubes) 26d₁ to 26dₙ (n is an integer equal to or more than 1), the gain adjusters 26e₁ to 26eₙ, the switching circuits 26f₁ to 26fₙ, the signal addition circuit 26g, and the array of lens 26h₁ to 26hₙ. Therefore, description of them will be omitted.

In the modification, the lens 136a is arranged so that a line defined from a principal point of the lens 136a to the measurement point of the sample 12 may be located on the optical axis of the lens 136a and the length of the line almost may coincide with the focal length of the lens 136a. Accordingly, the fluorescence emitted by the sample 12 is formed to a flux of substantially collimated light having a uniform distribution of light intensity when the fluorescence passes throughout the lens 136a. The flux of the substantially collimated fluorescence is divided into a plurality of portions and the portions are received on a plurality of segments of the PMTs 136d₁ to 136dₙ, separately. In the modification example, the fluorescence is formed to a flux of substantially collimated light. The fluorescence may not be formed to a flux of completely collimated light. The flux of the fluorescence may be spread at least almost uniformly on the segments of the PMTs 136d₁ to 136dₙ.

As described above, after the fluorescence passing throughout the lens 136a is formed to a flux of substantially collimated light having uniform distribution of light intensity, the light-receiving unit 136 allows the PMTs 136d₁ to 136dₙ to receive a plurality of divided portions of the flux of the fluorescence on a plurality of segments thereof separately, in the same manner as the light-receiving unit 26 illustrate in FIG 3. Since the divided portions of fluorescence having uniform distribution of light intensity are received on a plurality of the segments separately, output powers from the PMTs 136d₁ to 136dₙ can be prevented from being saturated.
Further, when the light-receiving unit 136 operates all of the switching circuits 136f₁ to 136fₙ to be on at first and the fluorescence intensity calculated in the analyzing device 80 exceeds a threshold, some of the switching circuits 136f₁ to 136fₙ can be turned off. Accordingly, the signal level in the signal processing unit 42 and the analyzing device 80 can be regulated without any restraint. As a result, dynamic range of the fluorescence intensity which can be processed and outputted in the signal processing unit 42 and analyzing device 80 is extended wider than before. Therefore, the fluorescence relaxation time can be calculated in a wide dynamic range of the fluorescence intensity. When the analyzing device 80 calculates the fluorescence intensity, the fluorescence intensity is calculated based on information of the number of the on operation of the switching circuits among the switching circuits 136f₁ to 136fₙ.

Although the fluorescence detection device and the fluorescence detection method according to the present invention have been described above in detail, the present invention is not limited to the embodiment and modifications described above. It should be understood that various changes and modifications may be made without departing from the scope of the present invention.

### DESCRIPTION OF REFERENCE NUMERALS

- 10: Flow cytometer
- 12: Sample
- 22: Laser light source unit
- 22a: Laser light source
- 22b: Lens
- 22c: Laser driver
- 24, 26, 126, 136: Light-receiving unit
- 26a, 126a, 136a: Lens
- 26b: Diffuser panel
- 26c, 126c, 136c: Band-pass filter
- 26d₁ to 26dₙ, 126d₁ to 126dₙ, 136d₁ to 136dₙ: Photo multiplier tube
- 26e₁ to 26eₙ, 126e₁ to 126eₙ, 136e₁ to 136eₙG: Gain adjuster
- 26f₁ to 26fₙ, 126f₁ to 126fₙ, 136f₁ to 136fₙ: Switching circuit
- 26g, 126g, 136g: Signal addition circuit
- 26h₁ to 26hₙ, 126h₁ to 126hₙ, 136h₁ to 136hₙ: Array of lens
- 126i: Optical wave guide
- 28: Control/processing unit
- 30: Tube
- 32: Collection vessel
- 40: Signal generation unit
- 42: Signal processing unit
- 44: Controller
- 46: Oscillator
- 48: Power splitter
- 50, 52, 54, 62: Amplifier
- 58: IQ mixer
- 60: Low-pass filter
- 80: Analyzing device
- 80a: Fluorescence intensity signal generating unit
- 80b: Fluorescence intensity calculating unit
- 80c: Phase delay calculating unit
- 80d: Signal control unit
- 80e: Fluorescence relaxation time calculating unit

## Claims

1. A fluorescence detection device for processing fluorescent signal obtained by receiving fluorescence which is emitted by a measurement obj ect at a measurement point, the measurement object irradiated with laser light, the device comprising:
a laser light source unit operable to output laser light for irradiation of a measurement obj ect;
a light-receiving unit operable to output a fluorescent signal of fluorescence emitted by the measurement object which is irradiated with the laser light;
a light source control unit operable to generate a modulation signal at a predetermined frequency to time-modulate the intensity of the laser light outputted from the laser light source unit; and
a processing unit operable to calculate, by using the modulation signal, a fluorescence relaxation time of the fluorescence emitted by the measurement object from the fluorescent signal outputted from the light-receiving unit when the measurement object is irradiated with the time-modulated laser light;
the light-receiving unit including a lens for collecting the fluorescence which is arranged between the measurement point of the measurement obj ect and a light-receiving surface for the fluorescence, a means for forming the fluorescence passing through the lens to a light flux whose distribution of light intensity is uniform, and light-receiving elements for receiving, on a plurality of segments thereof separately, a plurality of divided portions of the flux of the fluorescence formed by the means, respectively.

2. The fluorescence detection device according to claim 1, wherein the light-receiving unit includes a signal addition device operable to add partial fluorescent signals each other, the partial fluorescent signals obtained by receiving the flux on the plurality of the segments of the light-receiving elements respectively.

3. The fluorescence detection device according to claim 2, wherein the light-receiving unit includes switching circuits operable to operate on or off supplies of the partial fluorescent signals to the signal addition device for respective segments.

4. The fluorescence detection device according to claim 3, wherein the processing unit is operable to calculate the fluorescence relaxation time, is and further operable to limit, in number, the partial fluorescent signals to be supplied to the signal addition device by the switching circuits when fluorescence intensity calculated from the fluorescent signal exceeds a predetermined threshold.

5. The fluorescence detection device according to claim 3 or 4, the light-receiving unit includes gain adjusters adjusting gains of the partial fluorescent signals for the respective segments before some of the partial fluorescent signals are supplied to the switching circuits so that gains of the adjusted partial fluorescent signals can be identical with each other.

6. The fluorescence detection device according to any one of claims 1 to 5, wherein the light-receiving unit includes a diffuser panel between the lens and the light-receiving surface to cause the lens to focus the fluorescence on the diffuser panel.

7. The fluorescence detection device according to any one of claims 1 to 5, wherein the light-receiving unit includes an tube-shaped optical wave guide between the lens and the light-receiving surface, the optical wave guide arranged in parallel with an axis of the lens to cause the optical wave guide to reflect the fluorescence incident thereto on a surface of a wall thereof.

8. The fluorescence detection device according to any one of claims 1 to 5, wherein the light-receiving unit has the lens arranged to form the collected fluorescence to a flux of light substantially collimated light and having uniform distribution of light intensity.

9. A fluorescence detection method for processing fluorescent signal obtained by receiving fluorescence which is emitted by a measurement obj ect at a measurement point, the measurement object irradiated with laser light, the method comprising steps of:
irradiating a measurement object with laser light whose intensity is time-modulated by using a modulation signal at a predetermined frequency;
forming fluorescence emitted by the measurement object irradiated with the laser light to a flux of the fluorescence having uniform distribution of light intensity, and generating a plurality of partial fluorescent signals by receiving a plurality of divided portions of the flux of the fluorescence respectively;
adding at least some of the partial fluorescent signals altogether to generate a single fluorescent signal; and
calculating a fluorescence relaxation time of the fluorescence emitted by the measurement object from the generated fluorescent signal by using the modulation signal.

10. The fluorescence detection method according to claim 9, further comprising a step of limiting, in number, the partial fluorescent signals to be added when fluorescence intensity of the fluorescence emitted from the measurement object is calculated from the fluorescent signal and the calculated fluorescence intensity exceeds a predetermined threshold.
